# FASCICULE DE BREVET EUROPEEN

(11) **EP 0 866 405 B1**
(45) Date de publication et mention de la délivrance du brevet: **02.10.2002**
(21) Numéro de dépôt: 98400617.1
(22) Date de dépôt: 16.03.1998
(51) Int. Cl.: G06F 13/40

(54) **Bus de communication numérique assurant la connexion de modules électroniques**
Digitales Kommunikationsbus zur Verbindung von elektronischen Modulen
Digital communication bus for connecting electronic modules

(30) Priorité: 20.03.1997 FR 9703522
(43) Date de publication de la demande: 23.09.1998
(73) Titulaire: Schneider Automation, 06560 Valbonne (FR)
(72) Inventeur: Pignault, Bernard, Ing., 06370 Mouans-Sartoux (FR)

(56) Documents cités:
- EP-A- 0 195 595
- EP-A- 0 727 729
- US-A- 5 430 396
- PATENT ABSTRACTS OF JAPAN vol. 014, no. 414 (E-0975), 7 septembre 1990 & JP 02 159849 A (TOSHIBA CORP), 20 juin 1990,

## Description

La présente invention concerne un bus de communication numérique assurant la connexion de modules électroniques.

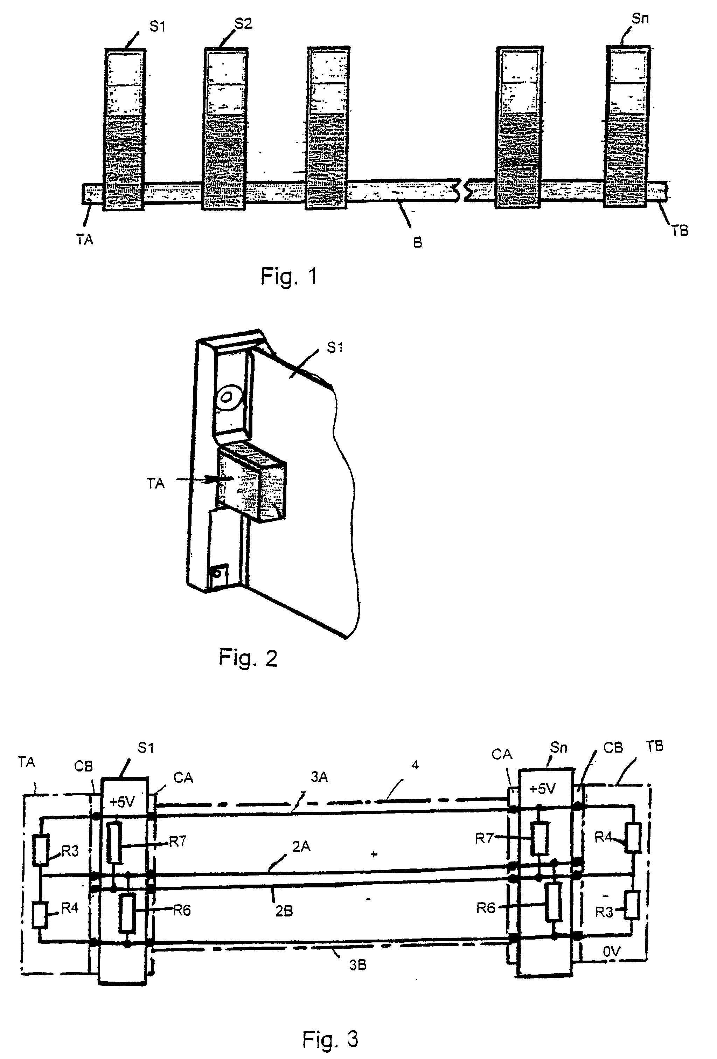

Pour assurer la distribution, dans l'espace, de fonctions d'automatisme (racks, modules ou coupleurs divers), on utilise en se référant à la figure 1, un bus B qui relie les différentes stations d'automatisme telles que S1, S2,..Sn. Ce bus se compose de paires de transmission et se termine, aux deux extrémités, par des terminaisons de ligne identiques TA et TB. Cet agencement ne permet pas de détecter un défaut de continuité du bus.

Le brevet EP 0 517 609 décrit un bus série apte à relier de tels modules d'automatisme.

La présente invention a pour objet de fournir un bus qui permet de détecter un défaut de continuité du bus, par exemple un défaut de connexion de l'une des deux terminaisons de lignes. En l'absence d'un tel défaut, la ligne utilisée pour cette détection reste utilisable pour la communication numérique.

Conformément à l'invention, le bus est constitué par au moins une paire de lignes de transmission de données et se termine par des terminaisons de ligne et il est essentiellement caractérisé par le fait qu'il comporte, par exemple dans les deux terminaisons de ligne, des composants imposant la transmission avec polarisation et inversant la polarisation dès qu'au moins une des terminaisons de ligne est absente ou non reliée au bus ou que le bus est ouvert.

Selon une caractéristique, le bus comporte, dans chaque module, deux résistances associées à une paire de transmission et pouvant polariser cette paire, l'une de ces résistances étant reliée à une première ligne de cette paire, l'autre résistance étant reliée à la seconde ligne.

Selon une autre caractéristique, le bus comporte, à chaque extrémité, un pont diviseur dont le point milieu est relié à une ligne, la seconde ligne se connectant, côté première terminaison de ligne, sur une résistance, la première ligne se connectant côté seconde terminaison de ligne sur une résistance, les ponts étant inversés d'une extrémité à l'autre.

Selon une autre caractéristique, le bus comporte, à chaque extrémité, un pont doublement diviseur de trois résistances, la première ligne se connectant, côté première terminaison de ligne, à un condensateur relié à un des deux points milieux du pont, la seconde ligne se connectant, côté second terminaison de ligne, à un condensateur relié à un des deux points milieux du pont.

L'invention va maintenant être décrite avec plus de détail en se référant à des modes de réalisation donnés à titre d'exemples et représentés par les dessins annexés sur lesquels:
- la figure 1 est un schéma d'architecture composée de modules électroniques connectés par un bus selon l'invention;
- la figure 2 est un schéma de la terminaison de ligne du bus selon l'invention;
- la figure 3 est un schéma d'un premier mode de réalisation du bus selon l'invention;
- la figure 4 est un schéma du bus de la figure 3 où les deux terminaisons de ligne sont manquantes;
- la figure 5 est un schéma d'un second mode de réalisation du bus selon l'invention;
- la figure 6 est un schéma du bus de la figure 5 où la terminaison de ligne TA est manquante;
- la figure 7 est un schéma du bus de la figure 5 où la terminaison de ligne TB est manquante;
- la figure 8 est un mode de réalisation du bus réalisant l'adaptation d'impédance pour les hautes fréquences.

On a représenté à la figure 1, une pluralité de modules électroniques S1, S2,....Sn destinés à échanger, en temps réel, des données numériques, par exemple des variables et/ou des messages numériques, via un bus B de type série. Ces modules peuvent être des coupleurs ou des baies d'automates programmables ou encore des stations de type PC.

Le bus B se compose de plusieurs paires de transmission dont une paire 3A-3B fournit une tension continue (+5 V). Une paire 2A-2B assure l'arbitrage conformément au brevet EP 517 609 précité. Cette paire est au standard RS 485.

Les paires du bus sont noyées, entre les modules tels que S1 et S2, dans un câble 4. A l'intérieur de chaque module tel que S1, S2,.. les paires aboutissent à deux connecteurs CA-CB de ce module. Ces connecteurs servent à brancher les câbles d'interconnexion 4 réunissant les modules ou les terminaisons de ligne qui sont décrites ci-après.

Les deux extrémités du réseau se terminent par des terminaisons de ligne TA et TB qui se montent sur les deux connecteurs CB des deux modules extrêmes S1 et Sn du réseau.

La terminaison de ligne TA (la figure 2) est constituée par un boîtier pourvu d'un connecteur et contenant une carte avec des composants électroniques.

Sur la ligne 2A-2B, une polarisation en tension est nécessaire. Elle donne l'un des deux états logiques de la paire différentielle (le 1), tandis que l'autre état (le 0) est imposé par un ou plusieurs émetteurs des modules.

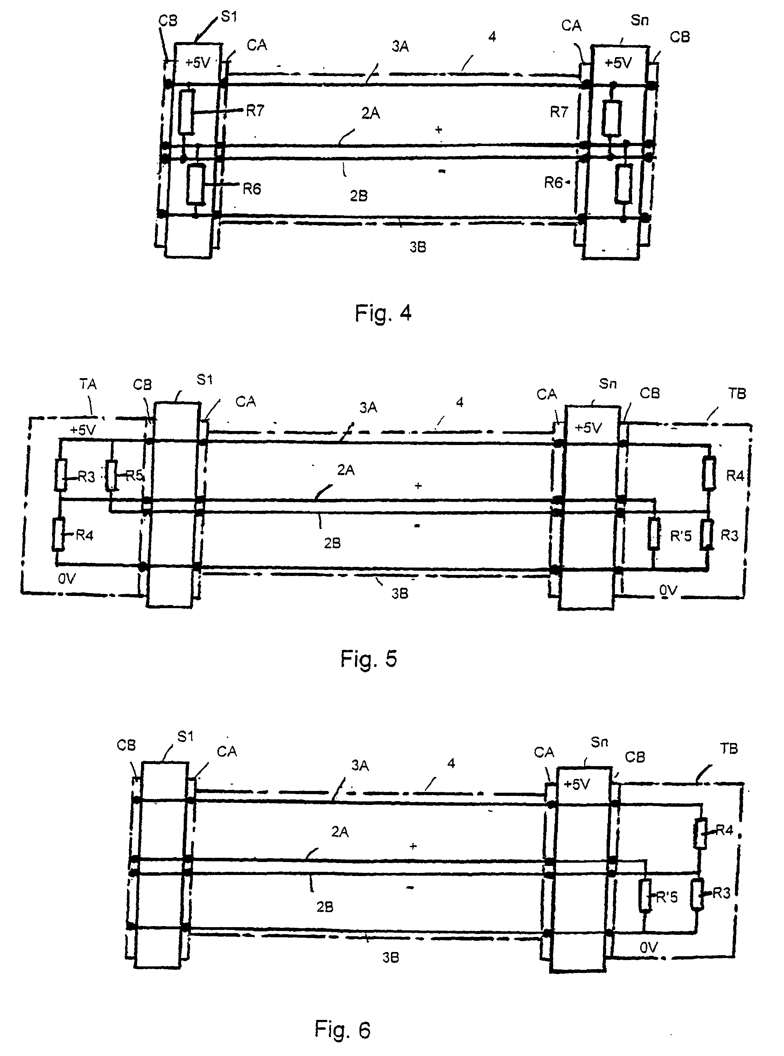

Dans le mode de réalisation des figures 3 et 4, chaque module comporte une résistance R6 montée entre la ligne 2A et le 0V (ligne 3B), ainsi qu'une résistance R7 montée entre le 5V (ligne 3A) et la ligne 2B. Ces résistances ont de fortes valeurs (par exemple 20 kΩ et 22 kΩ). Chaque terminaison de ligne comporte un pont diviseur R3-R4 branché aux bornes de la paire d'alimentation 3A-3B. Le point milieu du pont R3-R4 de la terminaison TA est branché à la première ligne 2A. Le point milieu du pont R4-R3 de la terminaison TB est branché à la seconde ligne 2B.

La détection de l'absence ou le défaut de connexion d'au moins une des deux terminaisons de ligne TA et TB s'effectue grâce aux deux résistances R6 et R7.

Dans le mode de réalisation des figures 5 à 7, chaque terminaison de ligne comporte un pont diviseur R3-R4 branché aux bornes de la paire d'alimentation 3A-3B. Le point milieu du pont R3-R4 de la terminaison TA est branché à la première ligne 2A. Le point milieu du pont R4-R3 de la terminaison TB est branché à la seconde ligne 2B. La terminaison TA comporte une résistance R5 connectée à la seconde ligne 2B et à la ligne d'alimentation 3A (+5V). La terminaison TB comporte une résistance R5' connectée à la première ligne 2A et à la ligne d'alimentation 3B (0V).

A titre indicatif, les résistances ont les valeurs suivantes: 150 Ω pour R3, 350 Ω pour R4. Les résistances R5 et R5' ont des fortes valeurs (par exemple entre 2,5 et 3 kΩ).

Les terminaisons de ligne TA et TB sont, pour polariser la paire 2A-2B, tous deux interconnectées par le bus. Si l'une des deux terminaisons de ligne seulement est connectée, la polarisation inverse est donnée à cette paire et le défaut est alors détecté par les modules.

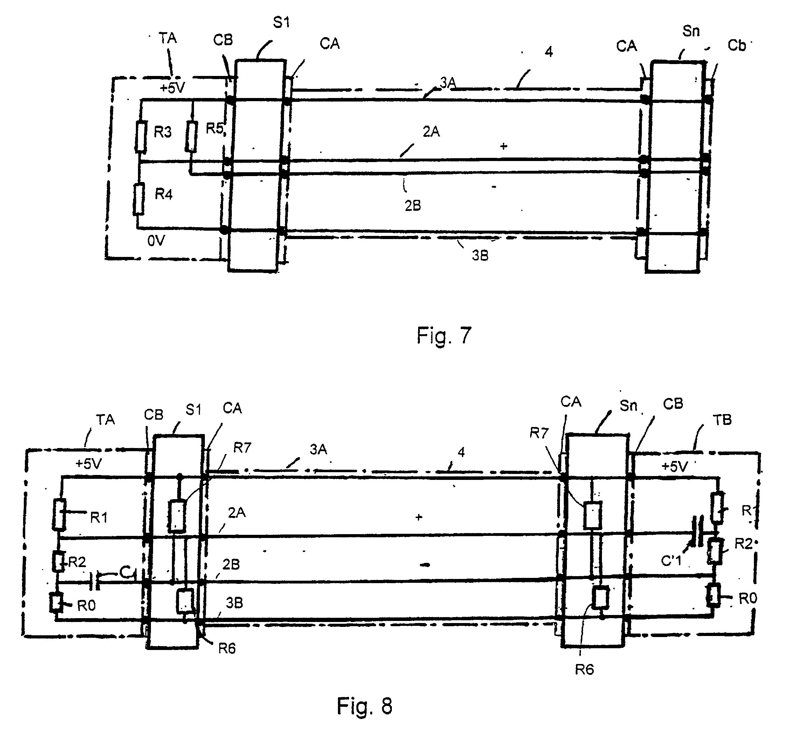

Dans le mode de réalisation de la figure 8, chaque terminaison de ligne TA ou TB comporte un pont doublement diviseur de trois résistances R1, R2, R0. La seconde ligne 2B se connecte, dans la terminaison de ligne TA, à un condensateur C1 relié au point milieu des résistances R0- R1 du pont et, dans la terminaison de ligne TB, au point milieu des résistances R2-R0. La première ligne 2A se connecte, dans la terminaison de ligne TA, au point milieu des résistances R1-R2 et, dans la terminaison de ligne TB, à un condensateur C'1 relié au point milieu des résistances R1-R2 du pont.

Le montage donne la tension de polarisation de la paire 2A-2B (à partir de la tension continue de +5v) et procure une impédance différentielle proche de la valeur (120 Ohms) qui adapte la paire (dont l'impédance caractéristique a cette valeur nominale).

Le fonctionnement du bus va maintenant être décrit.

On se référera tout d'abord aux figures 3, 5 et 8 dans lesquelles les deux terminaisons de lignes TA et TB sont en place.

Si la tension d'alimentation est de 5V, la tension sur la ligne 2A est proche de 3,5 V et la tension sur la ligne 2B est proche de 1,5 V. La différence de tension est donc proche de + 2V. L'état logique est 1 et le fonctionnement de l'arbitrage est normal.

Lorsque seule la terminaison de ligne TB est reliée (figure 6), la tension sur la ligne 2A est 0 V et la tension sur la ligne 2B est 1,5 V. La différence de tension est donc de -1,5 V. L'état logique est 0 et le défaut est détecté par les modules. Le fonctionnement de l'arbitrage peut alors être bloqué.

Lorsque seule la terminaison de ligne TA est reliée (figure 7), la tension sur la ligne 2A est proche de 3,5 V tandis que la tension sur la ligne 2B est proche de 5V. La différence de tension est donc proche de -1,5 V. L'état logique est 0 et le défaut est détecté par les modules. Le fonctionnement de l'arbitrage peut alors être bloqué.

Le schéma ne polarise, à basse impédance, qu'un seul des deux conducteurs dans chaque terminaison de ligne, tandis que le second conducteur est localement tiré à haute impédance vers l'une des deux tensions d'alimentation. Ce tirage devient insignifiant dès lors que la continuité du bus est établie et que la basse impédance de la seconde terminaison de ligne vient s'imposer à distance.

Lorsque ni l'une ni l'autre des terminaisons de ligne TA ou TB n'est reliée (figure 4), la tension sur la ligne 2A est 0 V et la tension sur la ligne 2B est 5 V. La différence de tension est donc de -5 V. L'état logique est 0 et le défaut est détecté par les modules. Le fonctionnement de l'arbitrage peut alors être bloqué.

Dans le mode de réalisation de la figure 8, l'adaptation d'impédance est réalisée pour les hautes fréquences. Cette solution convient pour des bus longs et des fronts rapides. La solution des figures 5 à 7 convient plutôt à des bus courts et pas trop rapides.

Ainsi, la ligne 3A pourrait être remplacée par une alimentation propre à chaque module.

## Revendications

1. Bus de communication numérique entre des modules électroniques (S1, Sn), constitué par au moins une paire de lignes de transmission de données (2A, 28) et se terminant par des terminaisons de lignes (TA, TB), **caractérisé par le fait qu'**il comporte des composants (R6, R7, R3, R4) imposant la transmission avec polarisation et inversant la polarisation dès qu'au moins une des terminaisons de ligne est absente ou non reliée au bus ou que le bus est ouvert.

2. Bus selon la revendication 1, **caractérisé par le fait qu'**il comporte, dans chaque module (S1, Sn), deux résistances (R6, R7) associées à une paire de transmission (2A, 2B) et pouvant polariser cette paire, l'une de ces résistances (R6) étant reliée à une première ligne (2A) de cette paire, l'autre résistance (R7) étant reliée à la seconde ligne (2B).

3. Bus selon l'une quelconque des revendications précédentes, **caractérisé par le fait qu'**il comporte, à chaque extrémité (TA, TB), un pont diviseur (R3-R4) dont le point milieu est relié à une ligne (2A ou 2B), la seconde ligne (2B) se connectant, côté première terminaison de ligne (TA), sur une résistance (R5), la première ligne (2A) se connectant côté seconde terminaison de ligne (TB) sur une résistance (R5'), les ponts (R3, R4) étant inversés d'une extrémité à l'autre.

4. Bus selon l'une quelconque des revendications précédentes, **caractérisé par le fait qu'**il comporte, à chaque extrémité (TA, TB), un pont doublement diviseur de trois résistances (R1, R2, R0), la première ligne (2B) se connectant, côté première terminaison de ligne (TA), à un condensateur (C1) relié à un des deux points milieux du pont, la seconde ligne (2A) se connectant, côté second terminaison de ligne (TB), à un condensateur (C'1) relié à un des deux points milieux du pont.

## Patentansprüche

1. Digitaler Kommunikationsbus, der sich zwischen elektronischen Modulen (S1, Sn) befindet. Er besteht aus mindestens einem Leitungspaar zur Datenübertragung (2A, 2B) und wird von Leitungsabschlüssen (TA, TB) abgeschlossen. Er ist durch die Tatsache **gekennzeichnet**, dass er Bauteile umfasst (R6, R7, R3, R4), die eine Übertragung mit Polarisation und Umkehren der Polarisation bewirken, sobald mindestens einer der Leitungsabschlüsse fehlt oder nicht an den Bus angeschlossen ist oder der Bus offen ist.

2. Bus gemäß dem Patentanspruch 1, der durch die Tatsache charakterisiert ist, dass er in jedem Modul (S1, Sn) zwei Widerstände (R6, R7) besitzt, die mit einem Übertragungspaar (2A, 2B) verbunden sind und dieses Paar polarisieren können. Einer dieser Widerstände (R6) ist mit einer ersten Leitung (2A) dieses Paares verbunden. Der andere Widerstand (R7) ist mit der zweiten Leitung (2B) verbunden.

3. Bus gemäß einem der vorangehenden Patentansprüche, der beliebig gewählt werden kann. Er ist durch die Tatsache **gekennzeichnet**, dass er an jedem Ende (TA, TB) eine Teilungsbrücke (R3-R4) besitzt, deren Mittelpunkt mit einer Leitung (2A oder 2B) verbunden ist. Die zweite Leitung (2B) ist mit der ersten Seite des Leitungsabschlusses (TA) an einen Widerstand (R5) angeschlossen. Die erste Leitung (2A) ist mit der zweiten Seite des Leitungsabschlusses (TB) an einen Widerstand (R5') angeschlossen. Die Brücken (R3, R4) sind von einem Ende zum anderen umgepolt.

4. Bus gemäß einem der vorangehenden Patentansprüche, der beliebig gewählt werden kann. Er ist durch die Tatsache **gekennzeichnet**, dass er an jedem Ende (TA, TB) eine Brücke mit doppelter Teilung mit drei Widerständen (R1, R2, R0) hat. Die erste Leitung (2B) ist mit der ersten Seite des Leitungsabschlusses (TA) an einen Kondensator (C1) angeschlossen, der wiederum an einen der beiden Mittelpunkte der Brücke angeschlossen ist. Die zweite Leitung (2A) ist mit der zweiten Seite des Leitungsabschlusses (TB) an den Kondensator (C'1) angeschlossen, der wiederum an einen der beiden Mittelpunkte der Brücke angeschlossen ist.

## Claims

1. Digital communication bus between electronic modules (S1, Sn), composed of at least one pair of data transmission lines (2A, 2B) and terminating by line terminators (TA, TB), **characterized by** the fact that it comprises, for example in the two line terminators (TA, TB), components (R6, R7, R3, R4) imposing transmission with polarization and inverting the polarization whenever at least one or both line terminators are missing, or are not connected to the bus, or the bus is open.

2. Bus according to claim 1, **characterized by** the fact that in each module (S1, Sn), it comprises two resistances (R6, R7) associated with a transmission pair (2A, 2B) and capable of polarizing this pair, one of these resistances (R6) being connected to a first line (2A) in this pair, the other resistance (R7) being connected to the second line (2B).

3. Bus according to any one of the previous claims, **characterized by** the fast that at each end (TA, TB) it comprises a dividing bridge (R3-R4), the midpoint of which is connected to one line (2A or 2B), the second line (2B) being connected at the first line terminator end (TA) to a resistance (R5), the first line (2A) being connected at the second line terminator end (TB) to a resistance (R5'), the bridges (R3, R4) being inverted from one end to the other.

4. Bus according to any one of the previous claims **characterized by** the fact that at each end (TA, TB), it comprises a doubly dividing bridge with three resistances (R1, R2, R0), the first line (2B) being connected at the first line terminator end (TA) to a capacitor (C1) itself connected to one of the two midpoints of the bridge, the second line (2A) being connected at the second line terminator end (TB) to a capacitor (C'1) itself connected to one of the two midpoints of the bridge.
